# EUROPÄISCHE PATENTSCHRIFT

(11) **EP 3 141 120 B1**
(45) Veröffentlichungstag und Bekanntmachung des Hinweises auf die Patenterteilung: **12.09.2018**
(21) Anmeldenummer: 16188406.9
(22) Anmeldetag: 12.09.2016
(51) Int. Cl.: A21B 1/40, F24C 7/08, G05D 22/00, G05D 23/19

(54) **GARGERÄT MIT BELADUNGSABHÄNGIGER STEUERUNG UND VERFAHREN ZUM STEUERN EINES GARGERÄTES**
COOKING DEVICE WITH LOAD-DEPENDENT CONTROLLING AND METHOD FOR CONTROLLING A COOKING DEVICE
APPAREIL DE CUISSON DOTÉ D'UNE COMMANDE ASSERVIE AU CHARGEMENT ET PROCÉDÉ DE COMMANDE D'UN APPAREIL DE CUISSON

(30) Priorität: 11.09.2015 DE 102015115340
(43) Veröffentlichungstag der Anmeldung: 15.03.2017
(73) Patentinhaber: Wiesheu GmbH, 71723 Großbottwar (DE)
(72) Erfinder: Ramm, Alexander, 71706 Markgröningen (DE); Mieth, Olaf, 02625 Bautzen (DE); Schüle, Frank, 73655 Plüderhausen (DE)
(74) Vertreter: Witte, Weller & Partner Patentanwälte mbB

(56) Entgegenhaltungen:
- WO-A1-00/27227
- DE-A1- 10 336 081
- US-A1- 2005 247 695

## Beschreibung

Die Erfindung betrifft ein Verfahren zum beladungsabhängigen Steuern eines Gargerätes und ein derart gesteuertes Gargerät.

Im Stand der Technik gibt es zahlreiche Verfahren zum Steuern von Backöfen oder allgemein Gargeräten.

Aus der DE 10 2014 100 104 A1 ist ein Gargerät bekannt, bei dem mit Hilfe einer Antenne ein elektromagnetisches Wechselfeld im Garraum erzeugt wird, und bei dem mittels eines Dipmeters detektiert werden kann, ob einzelne Backbleche in den Garraum eingeschoben sind, die jeweils mit Erkennungsbauteilen, etwa in Form von Schwingkreisen, versehen sind.

Dies erfordert es allerdings, dass jedes Backblech mit einem entsprechenden Erkennungsbauteil ausgestattet ist. Dies ist eine aufwändige Ausführung, die außerdem zu einer Verteuerung der Backbleche führt.

Ferner ist es grundsätzlich bekannt, die Belegung eines Gargerätes mit Hilfe eines Garprozessfühlers zu überwachen, der in ein Produkt eingesteckt wird, wie etwa aus der DE 199 45 021 A1 bekannt.

Gemäß der EP 1 867 926 A2 sind in einem Garraum mehrere Behandlungsebenen vorgesehen, wobei jeder Behandlungsebene ein Prozessfühler zur Überwachung zugeordnet ist.

Auch solche Ausführungen sind aufwändig und teuer.

Aus der US 2005/0247695 A1 ein Verfahren zum Steuern eines Ofens und ein Ofen sind bekannt, wobei überprüft wird, ob die tatsächliche Temperatur größer als eine voreingestellte Temperatur ist, wobei in Abhängigkeit davon, ob die eingestellte Temperatur überschritten wird oder nicht, die Heizung für eine bestimmte Zeit eingeschaltet wird. Dabei wird in Abhängigkeit davon, wie groß der Abstand zwischen der eingestellten Temperatur und der tatsächlichen Temperatur ist, die Einschaltzeit verkleinert. Nähert sich die Temperatur an die eingestellte Temperatur an, so wird die Einschaltzeit verkürzt.

Eine solche Steuerung soll die Aufheizzeit bis zum Erreichen einer Zieltemperatur möglichst kurz halten.

Aus der DE 103 36 081 A1 sind ferner ein Verfahren zum Backen mehrerer Backwaren sowie ein Etagenbackofen hierfür bekannt, wobei in verschiedenen Backetagen unterschiedliche Backwaren gebacken werden, die unterschiedliche Backtemperaturen benötigen. Hierbei wird ein Verfahren zum gleichzeitigen Backen mehrerer Backwaren, die unterschiedliche Backtemperaturen benötigen, in einem Backofen mit einem Heizgaskanal mit einer einheitlichen Temperatur verwendet, das die folgenden Schritte aufweist:
(a) Bereitstellen folgender Werte:
   (i) einer Solltemperatur Tempₛₒₗₗ, auf die der Heizgaskanal geregelt werden soll,
   (ii) einer idealen Backtemperatur Temp_{back} für jede Backware,
   (iii) einer idealen Backdauer t_{back} für jede Backware bei ihrer idealen Backtemperatur temp_{back},
(b) Ermitteln einer neuen Backdauer t_{back-neu} für jede Backware, wobei sich die neue Backdauer t_{back-neu} dadurch ergibt, dass die ideale Backdauer t_{back} in Abhängigkeit von der Differenz zwischen der Solltemperatur Tempₛₒₗₗ im Heizgaskanal und der jeweiligen idealen Backtemperatur Temp_{back} für die jeweiligen Backware entsprechend verkürzt wird, wenn Temp_{back} < Tempₛₒₗₗ ist, oder entsprechend verlängert wird, wenn Temp_{back} größer Tempₛₒₗₗ ist.

Es geht hier also darum, eine einheitliche Backtemperatur für unterschiedliche Backkammern zu verwenden und die jeweilige Backdauer in Abhängigkeit davon anzupassen, ob die ideale Backtemperatur größer oder kleiner als die tatsächlich verwendete Backtemperatur ist.

Vor diesem Hintergrund liegt der Erfindung die Aufgabe zu Grunde, ein vereinfachtes Verfahren zum Steuern eines Gargerätes zu offenbaren, das mit möglichst einfachen Mitteln eine beladungsabhängige, möglichst energiesparende Steuerung des Gargerätes erlaubt. Ferner soll ein Gargerät offenbart werden, das eine möglichst einfache, zuverlässige und energiesparende Steuerung in Abhängigkeit von der Beladung erlaubt.

Diese Aufgabe wird durch ein Verfahren zum Steuern eines Gargerätes gemäß einem produktspezifischen Behandlungsprogramm mit den folgenden Schritten gelöst:
(a) Beladen eines Garraums mit Produkten;
(b) Starten eines produktspezifischen Behandlungsprogramms mit mindestens einem Behandlungsschritt;
(c) Aufheizen des Garraums auf eine Solltemperatur gemäß einer Zeit-Temperatur-Vorgabe des Behandlungsprogramms;
(d) Überwachen, ob die Isttemperatur die vom Behandlungsprogramm vorgegebene Solltemperatur zu bestimmten Zeitpunkten erreicht oder überschreitet;
(e) Aufsummieren der Gesamtzeit, während derer die Solltemperatur überschritten wird;
(f) Für den Fall, dass die Überprüfung gemäß Schritt (d) mit "ja" zu beantworten ist, Ausschalten der Heizung;
(g) Für den Fall, dass die Überprüfung gemäß Schritt (d) mit "nein" zu beantworten ist, weiter überprüfen, ob die Gesamtzeit, während derer die Solltemperatur überschritten wird, größer oder gleich als ein produktspezifischer Anteil (x) einer Gesamtbehandlungszeit des Behandlungsprogramms ist, wobei der produktspezifischer Anteil (x) der Gesamtbehandlungszeit (t_{GDB}) zwischen 0 und 1 liegt und für einzelne Produkte (18) empirisch ermittelt und zusammen mit dem Behandlungsprogramm (30) abgespeichert wird;
(h) Für den Fall, dass die Überprüfung gemäß Schritt (g) mit "nein" zu beantworten ist, Einschalten der Heizung;
(i) Für den Fall, dass die Überprüfung gemäß Schritt (g) mit "ja" zu beantworten ist, Ausschalten der Heizung;
(j) Weiter überprüfen, ob die Gesamtdauer eines Behandlungsschrittes erreicht ist;
(k) Für den Fall, dass die Überprüfung gemäß Schritt (j) mit "ja" zu beantworten ist, Beenden des Behandlungsschrittes;
(l) Für den Fall, dass die Überprüfung gemäß Schritt (j) mit "nein" zu beantworten ist, Wiederholen der Schritte (c) bis (k).

Die Aufgabe der Erfindung wird auf diese Weise vollkommen gelöst.

Erfindungsgemäß wird auf besonders einfache Weise ein beladungsabhängiger Betrieb des Gargerätes erreicht, indem überwacht wird, für welche Zeit sich die Isttemperatur oberhalb der vom Behandlungsprogramm vorgegebenen Solltemperatur befindet und in Abhängigkeit von der aufsummierten Gesamtdauer, während derer die Solltemperatur überschritten ist, gemäß einem produktspezifischen Faktor, der zwischen 0 und 1 liegt, die Heizung abgeschaltet wird.

Es wird also gewissermaßen das Überschwingen der Temperatur über die vorgegebene Solltemperatur erfasst und dann, wenn die aufsummierte Zeit der Überschreitung der Solltemperatur einen bestimmten produktspezifischen Anteil, der z.B. etwa 55% betragen kann, die Heizung vorzeitig abgeschaltet.

Auf diese Weise kann ein zu langes Überschwingen der Isttemperatur über die Solltemperatur vermieden werden und eine besonders energiesparende Arbeitsweise erreicht werden.

In bevorzugter Weiterbildung der Erfindung werden die aufsummierte Gesamtzeit, während derer die Solltemperatur überschritten wird, sowie die Gesamtbehandlungszeit des Behandlungsprogramms ohne etwaige Beschwadungszyklen ermittelt.

Weiter bevorzugt wird der produktspezifische Anteil der Gesamtbehandlungszeit für einzelne Produkte, wie etwa für Einzelbrötchen, Doppelbrötchen, Laugenbrötchen, Brezeln, Baguettes, empirisch ermittelt und zusammen mit dem Behandlungsprogramm abgespeichert.

Auf diese Weise kann eine optimale, produktspezifische Anpassung der Behandlungszeiten an die jeweilige Beladung des Garraums mit Produkten erreicht werden.

In weiterer Ausgestaltung der Erfindung wird der Behandlungsschritt beendet, falls die Tür geöffnet wird oder ein nicht im Behandlungsprogramm vorgesehener Beschwadungszyklus eingeleitet wird.

Da ein derartiger Vorgang zu einer merklichen Veränderung des Ergebnisses einer Wärmebehandlung führt, ist es sinnvoll, im Falle eines solchen unvorhergesehen Ereignisses den Vorgang vorzeitig zu beenden, denn damit wäre sonst das Endergebnis stark verfälscht.

Ein erfindungsgemäßes Gargerät, das zur Wärmebehandlung von Produkten vorzugsweise gemäß dem vorstehend beschriebenen Programm ausgebildet ist, weist einem Garraum zur Aufnahme von Produktträgern, eine Heizung zur Beheizung des Garraums, und einen Sensor zur Überwachung der Isttemperatur auf, dessen Ausgangssignal einer Steuerung zugeführt ist, die zur automatischen Steuerung eines Wärmebehandlungsvorgangs gemäß einem produktspezifischen Behandlungsprogramm ausgebildet ist. Dabei ist die Steuerung dazu ausgebildet, die Zeit, während derer die Isttemperatur eine vom Behandlungsprogramm vorgegebene Solltemperatur erreicht oder überschreitet, zu erfassen und aufzusummieren, und dann, wenn die aufsummierte Zeit, während derer die vom Behandlungsprogramm vorgegebene Solltemperatur überschritten ist, einen bestimmten, produktspezifischen Anteil der Gesamtbehandlungszeit des Behandlungsprogramms erreicht, die Heizung auszuschalten. Dabei liegt der produktspezifischer Anteil der Gesamtbehandlungszeit zwischen 0 und 1 liegt und wird für einzelne Produkte empirisch ermittelt und zusammen mit dem Behandlungsprogramm abgespeichert wird. Vorzugsweise erfolgt die Steuerung gemäß dem vorstehend beschriebenen Behandlungsprogramm.

Der Sensor zur Erfassung der Isttemperatur ist vorzugsweise innerhalb des Garraums angeordnet, um die Isttemperatur des Garraums zu erfassen. Grundsätzlich wäre jedoch auch eine Erfassung der Isttemperatur an einer anderen Stelle oder die Verwendung eines Sensors an einem Produkt oder einem Produktträger möglich.

Der produktspezifische Anteil x liegt bevorzugt zwischen 0,3 und 0,7, und wird jeweils für ein produktspezifisches Behandlungsprogramm abgespeichert.

Es versteht sich, dass die vorstehend genannten und nachstehend noch zu erläuternden Merkmale der Erfindung nicht nur in der jeweils angegebenen Kombination sondern auch in anderen Kombinationen verwendet werden können, ohne den rahmen der Erfindung zu verlassen.

Weitere Merkmale und Vorteile der Erfindung ergeben sich aus den Ausführungsbeispielen unter Bezugnahme auf die Zeichnung. Es zeigen:
- Fig. 1: eine vereinfachte, perspektivische Ansicht eines Gargerätes, das als Backofen ausgebildet ist;
- Fig. 2: einen Auszug aus einem Wärmebehandlungsprogramm für ein bestimmtes Produkt, beispielsweise Brötchen, wobei die Temperatur T in Kelvin (K) über der Zeit in Millisekunden (ms) aufgetragen ist, mit einem Beschwadungszyklus, gefolgt von einem Backzyklus, mit Angabe der Solltemperatur und der Isttemperatur;
- Fig. 3: eine stark vereinfachte Darstellung eines Wärmebehandlungsprogramms zum Backen von Produkten mit einem Beschwadungszyklus und zwei Backschritten;
- Fig. 4: ein Flussdiagramm, das einen der Backschritte mit der erfindungsgemäßen beladungsabhängigen Steuerung zeigt;
- Fig. 5a,b: einen Vergleich zweier Temperaturverläufe über die Zeit bei demselben Wärmebehandlungsprogramm wie bei Fig. 2 zum Backen von Brötchen, mit einer Vollbelegung gemäß Fig. 5a und einer Teilbelegung gemäß Fig. 5b.

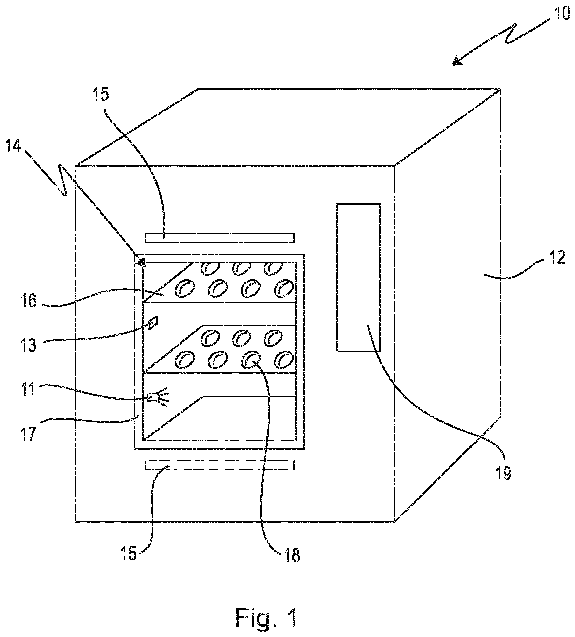

In Fig. 1 ist ein erfindungsgemäßes Gargerät in Form eines Backofens dargestellt und insgesamt mit der Ziffer 10 bezeichnet.

Das Gargerät 10 weist einen Garraum 14 auf, der mittels einer Tür 17 verschließbar ist und der zur Aufnahme einer Mehrzahl von Produktträgern 16 in Form von Backblechen ausgebildet ist. An der Innenoberfläche des Garraums 14 ist ein Sensor 13 angedeutet, der zur Erfassung der Isttemperatur Tᵢₛₜ des Garraums 14 dient. Beispielhaft sind zwei Produktträger 16 dargestellt, die in den Garraum eingeschoben sind und auf denen Produkte 18, beispielsweise Brötchen, aufgenommen sind.

Mit 15 ist beispielhaft eine Heizung des Garraums 14 angedeutet. Im Gehäuse 12 des Gargerätes 10 ist ferner eine Steuerung 19 aufgenommen, die eine vollautomatische, produktspezifisch programmgesteuerte Wärmebehandlung der Produkte 18 erlaubt.

Die Heizung 15 und der Sensor 13 sind mit der Steuerung 19 zwecks Erfassung der Isttemperatur Tᵢₛₜ des Garraums 14 und Steuerung der Heizung 15 elektrisch verbunden.

Ferner kann das Gargerät 10 noch eine Möglichkeit zur Beschwadung des Garraums 14 umfassen, wozu etwa eine Beschwadungsdüse 11 im Garraum 14 angeordnet sein kann, über die Wasser in den Garraum 14 gesprüht werden kann. Die Durchführung eines solchen Beschwadungszyklus ist bei bestimmten Backvorgängen vorteilhaft, beispielsweise beim Backen von Brötchen, um krosse Brötchen zu erhalten.

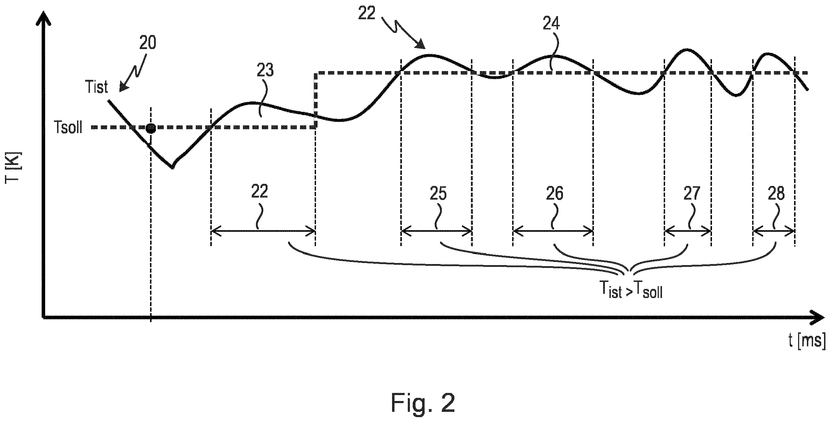

In Fig. 2 ist ein Auszug aus einem Backprogramm zum Backen von Brötchen vereinfacht dargestellt. Hierbei ist die Temperatur in K über der Zeit in ms aufgetragen. Die gestrichelte Kurve zeigt die Solltemperatur Tₛₒₗₗ, während die ausgezogene Kurve die Isttemperatur Tᵢₛₜ zeigt. Das Backprogramm weist eine erste Phase auf, bei der es sich um einen Beschwadungszyklus handelt, der insgesamt mit 20 bezeichnet ist.

An den Beschwadungszyklus 20 schließt sich ein Backzyklus 22 an, der aus einem ersten Backschritt 23 bei einer niedrigeren Temperatur und einem zweiten Backschritt 24 bei einer höheren Temperatur besteht (vgl. gestrichelte Kurve mit Solltemperatur Tₛₒₗₗ).

Die tatsächliche Temperatur Tᵢₛₜ weicht in der Regel von der Solltemperatur Tₛₒₗₗ ab, liegt also teilweise darüber, teilweise darunter. Die Zeitabschnitte, in denen die Isttemperatur Tᵢₛₜ über der Solltemperatur Tₛₒₗₗ liegt, sind mit 22 beim ersten Backschritt 23 und mit 25, 26, 27, 28 beim zweiten Backschritt 24 bezeichnet.

Der Kern der Erfindung besteht nun darin, die Zeiten, in denen die Isttemperatur Tᵢₛₜ über der Solltemperatur Tₛₒₗₗ liegt und bei denen es sich um keinen Beschwadungszyklus handelt, zu erfassen und als tᵢₛₜ aufzusummieren und mit der vorgegebenen Gesamtbehandlungszeit t_{GDB} ohne Beschwadungszyklen zu vergleichen. Die Gesamtbehandlungszeit t_{GDB} ohne Beschwadungszyklen ist vorgegeben (wird im Rahmen eines Versuchsbackprogramms für jedes Produkt empirisch ermittelt).

Erreicht die aufsummierte Zeit tᵢₛₜ ohne Beschwadungszyklen einen produktspezifischen Anteil x der Gesamtbehandlungszeit t_{GDB} des Behandlungsprogramms, d.h. ist tᵢₛₜ ≥ x ● t_{GDB}, so wird die Behandlung vorzeitig beendet, d.h. die Heizung 15 abgeschaltet, unabhängig davon, ob die aktuelle Isttemperatur Tᵢₛₜ die Solltemperatur Tₛₒₗₗ übersteigt oder unterschreitet.

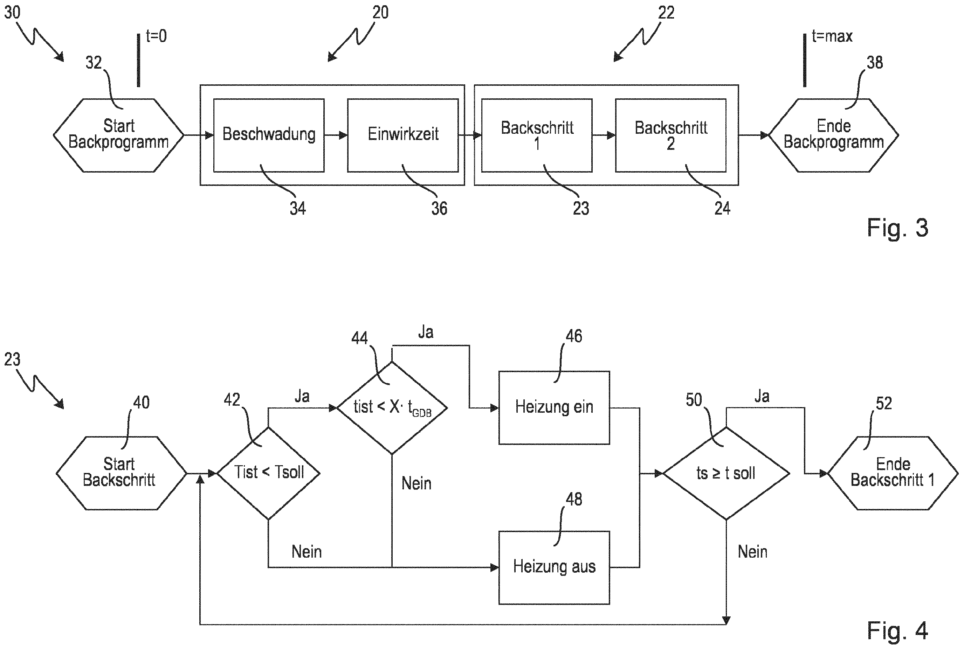

Dies wird im Folgenden anhand von Fig. 3 und 4 näher erläutert.

Fig. 3 zeigt ein mögliches produktspezifisches Backprogramm zum Backen von Brötchen, das insgesamt mit 30 bezeichnet ist. Bei 32 wird das Backprogramm 30 gestartet (t=0). Anschließend schließt sich zunächst ein Beschwadungszyklus 20 an, mit einem Beschwadungsschritt 34, während dem Wasser über die Beschwadungsdüse 11 in den Garraum 14 eingespritzt wird. Der Beschwadungsschritt 34 ist von einem Einwirkschritt 36 gefolgt. An den Beschwadungszyklus 20 schließt sich die Backphase 22 an, die im gezeigten Beispiel aus den beiden Backschritten 23 und 24 besteht. Mit dem Ende des zweiten Backschrittes 24 endet das Backprogramm bei 38 (t=tₘₐₓ). Die Gesamtbehandlungszeit t_{GDB} des Behandlungsprogramms ist die Gesamtzeit des Backzyklus 22 bestehend aus dem ersten Backschritt 23 und dem zweiten Backschritt 24 ohne Beschwadungszyklen 20. Die Gesamtbehandlungszeit t_{GDB} entspricht also der Gesamtzeit tₘₐₓ abzüglich der Dauer des Beschwadungszyklus 20.

In Fig. 4 ist nun die erfindungsgemäße Steuerung des Backprogramms in Abhängigkeit von der Beladung des Garraums 14 mit Produkten 18 anhand des ersten Backschritts 23 näher erläutert.

Bei 40 beginnt der erste Backschritt. Daran schließt sich eine Abfrage 42 an, ob die Isttemperatur Tᵢₛₜ kleiner als die Solltemperatur Tₛₒₗₗ ist. Ist dies nicht der Fall, d.h. übersteigt die Isttemperatur Tᵢₛₜ die Solltemperatur Tₛₒₗₗ, so wird die Heizung bei 48 ausgeschaltet.

Ergibt die Abfrage 42 jedoch, dass die Isttemperatur Tᵢₛₜ kleiner als die Solltemperatur Tₛₒₗₗ ist, so folgt eine weitere Abfrage 44, bei der geprüft wird, ob die Summe aller Zeiten, in der die Isttemperatur Tᵢₛₜ größer als die Solltemperatur Tₛₒₗₗ war (tᵢₛₜ), kleiner als ein bestimmter, produktspezifischer Anteil x der Gesamtbehandlungszeit t_{GDB} ist.

Ist dies der Fall, so wird bei 46 die Heizung 15 eingeschaltet. An die Einschaltung der Heizung bei 46 oder die Ausschaltung der Heizung bei 48 schließt sich bei 50 eine weitere Abfrage ein, um zu überprüfen, ob die Schrittzeit tₛₒₗₗ des Backschrittes 23 erreicht ist (tₛ ≥ tₛₒₗₗ). Ist dies der Fall, so endet der erste Backschritt 12 bei 52.

Ist dies nicht der Fall, so wird das Backprogramm (d.h. der erste Backschritt 23 gemäß den Vorgaben der Steuerung fortgesetzt, d.h. die Verzweigung führt zurück zum Eingang der Abfrage 42 (Tᵢₛₜ < Tₛₒₗₗ).

Durch die Abschaltung der Heizung 15, wenn die Abfrage bei 44 ergibt, dass ein bestimmter produktspezifischer Anteil x der Gesamtbehandlungszeit t_{GDB} erreicht ist, wird insgesamt eine beladungsabhängige Steuerung und ein besonders energiesparender Betrieb des Gargerätes gewährleistet.

Der Faktor x wird für jedes Produkt empirisch ermittelt, für das ein Backprogramm für einen automatischen Behandlungszyklus hinterlegt wird. Der Wert x liegt zwischen 0 und 1, und liegt in der Regel zwischen 0,3 und 0,7, meist im Bereich von etwa 0,5 bis 0,6.

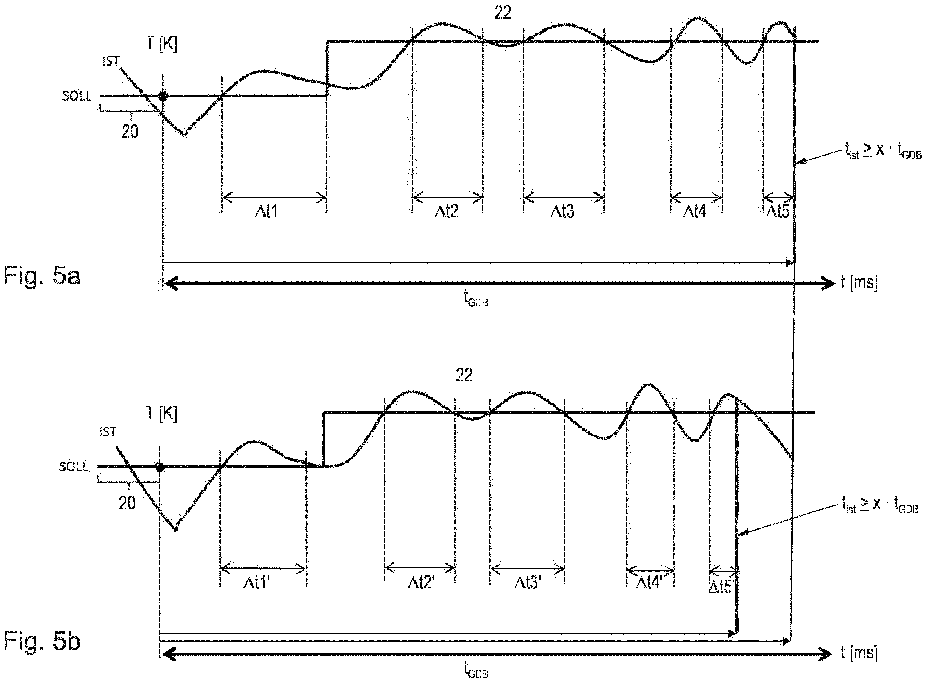

In Fig. 5a ist das Wärmebehandlungsprogramm zum Backen von Brötchen gemäß Fig. 2 nochmals bei Vollbelegung dargestellt und einem entsprechenden Wärmebehandlungsprogramm bei Teilbelegung gemäß Fig. 5b gegenübergestellt.

Der Beschwadungszyklus 20 ist in Fig. 5a, b links neben der Ordinate dargestellt. Im eigentlichen Diagramm ist der Backzyklus 22 bestehend aus den beiden Backschritten 23 und 24 dargestellt. Beispielhaft ist unten die Gesamtbehandlungszeit t_{GDB} angegeben. Das Programm summiert die einzelnen Zeitabschnitte Δt1, Δt2, Δt3, Δt4, Δt5 auf, in denen die Solltemperatur Tₛₒₗₗ überschritten wird. Wenn die Summe von Δt1 bis Δt5 (tᵢₛₜ) einen Anteil x von beispielsweise 50% erreicht, wird die Heizung abgeschaltet. Dies ist bei Vollbelegung in Fig. 5a dargestellt.

Zum Vergleich ist dasselbe Backprogramm bei Teilbelegung in Fig. 5b dargestellt. Die einzelnen Zeitabschnitte, in denen die Solltemperatur Tₛₒₗₗ überschritten wird, sind mit Δt1', Δt2', Δt3', Δt4', Δt5' bezeichnet. Auch hier erfolgt die Abschaltung, wenn Summe von Δt1' bis Δt5' (tᵢₛₜ) den Anteil x von 50% erreicht. Wegen der geringeren Beladung mit Brötchen wird dieser Wert früher erreicht. Am rechten Rand von Fig. 5a bzw. Fig. 5b ist die Abschaltung mit einem Pfeil gekennzeichnet, die dann erfolgt, wenn tᵢₛₜ ≥ x · t_{GDB}.

Durch diese Anpassung werden ein zu starkes Backen bei Teilbelegung vermieden und Energie eingespart.

## Patentansprüche

1. Verfahren zum Steuern eines Gargerätes gemäß einem produktspezifischen Behandlungsprogramm (30) mit den folgenden Schritten:
(a) Beladen eines Garraums (14) mit Produkten (18), die auf mindestens einem Produktträger (16) aufgenommen sind;
(b) Starten eines produktspezifischen Behandlungsprogramms (30) mit mindestens einem Behandlungsschritt (23, 24);
(c) Aufheizen des Garraums (14) auf eine Solltemperatur (Tₛₒₗₗ) gemäß einer Zeit-Temperatur-Vorgabe des Behandlungsprogramms (30);
(d) Überwachen, ob die Isttemperatur (Tᵢₛₜ) die vom Behandlungsprogramm (30) vorgegebene Solltemperatur (Tₛₒₗₗ) erreicht oder überschreitet;
(e) Aufsummieren der Gesamtzeit (tᵢₛₜ), während derer die Solltemperatur (Tₛₒₗₗ) überschritten wird;
(f) Für den Fall, dass die Überprüfung gemäß Schritt (d) mit "ja" zu beantworten ist, Ausschalten der Heizung (15);
(g) Für den Fall, dass die Überprüfung gemäß Schritt (d) mit "nein" zu beantworten ist, weiter überprüfen, ob die Gesamtzeit (tᵢₛₜ), während derer die Solltemperatur (Tₛₒₗₗ) überschritten wird, größer oder gleich als ein produktspezifischer Anteil (x) einer vorgegebenen Gesamtbehandlungszeit (t_{GDB}) des Behandlungsprogramms (30) ist (tᵢₛₜ ≥ x ● t_{GDB}), wobei der produktspezifischer Anteil (x) der Gesamtbehandlungszeit (t_{GDB}) zwischen 0 und 1 liegt und für einzelne Produkte (18) empirisch ermittelt und zusammen mit dem Behandlungsprogramm (30) abgespeichert wird;
(h) Für den Fall, dass die Überprüfung gemäß Schritt (g) mit "nein" zu beantworten ist, Einschalten der Heizung (15);
(i) Für den Fall, dass die Überprüfung gemäß Schritt (g) mit "ja" zu beantworten ist, Ausschalten der Heizung (15);
(j) Weiter überprüfen, ob die Gesamtdauer (tₛₒₗₗ) eines Behandlungsschrittes (23, 24) erreicht ist (tₛ ≥ tₛₒₗₗ);
(k) Für den Fall, dass die Überprüfung gemäß Schritt (j) mit "ja" zu beantworten ist, Beenden des Behandlungsschrittes (23, 24);
(l) Für den Fall, dass die Überprüfung gemäß Schritt (j) mit "nein" zu beantworten ist, wiederholen der Schritte (c) bis (k).

2. Verfahren nach Anspruch 1, bei dem die aufsummierte Gesamtzeit (tᵢₛₜ), während derer die Solltemperatur (Tₛₒₗₗ) überschritten wird, sowie die Gesamtbehandlungszeit (t_{GDB}) des Behandlungsprogramms (30) ohne etwaige Beschwadungszyklen (20) ermittelt werden.

3. Verfahren nach Anspruch 1 oder 2, bei dem der produktspezifischer Anteil (x) der Gesamtbehandlungszeit (t_{GDB}) im Bereich von 0,3 bis 0,7 liegt und für einzelne Produkte (18) empirisch ermittelt und zusammen mit dem Behandlungsprogramm (30) abgespeichert wird.

4. Verfahren nach einem der Ansprüche 1 bis 3, bei dem der Behandlungsschritt (23, 24) beendet wird, falls die Tür (17) geöffnet wird oder ein nicht im Behandlungsprogramm (30) vorgesehener Beschwadungszyklus eingeleitet wird.

5. Gargerät zur Wärmebehandlung von Produkten (18), mit einem Garraum (14) zur Aufnahme von Produktträgern (16), mit einer Heizung (15) zur Beheizung des Garraums (14), mit einem Sensor (13) zur Überwachung der Isttemperatur (Tᵢₛₜ), dessen Ausgangssignal einer Steuerung (19) zugeführt ist, die zur automatischen Steuerung eines Wärmebehandlungsvorgangs ausgebildet ist, vorzugsweise gemäß einem produktspezifischen Behandlungsprogramm (30) nach einem der vorhergehenden Ansprüche, wobei die Steuerung (19) dazu ausgebildet ist, die Zeit, während derer die Isttemperatur (Tᵢₛₜ) eine vom Behandlungsprogramm vorgegebene Solltemperatur (Tₛₒₗₗ) erreicht oder überschreitet, zu erfassen und aufzusummieren, und dann, wenn die aufsummierte Zeit (tᵢₛₜ), während derer die vom Behandlungsprogramm vorgegebene Solltemperatur (Tₛₒₗₗ) überschritten ist, einen bestimmten, produktspezifischen Anteil (x) einer vorgegebenen Gesamtbehandlungszeit (t_{GDB}) des Behandlungsprogramms (30) erreicht (tᵢₛₜ ≥ x ● t_{GDB}), die Heizung (15) auszuschalten, wobei der produktspezifische Anteil (x) der Gesamtbehandlungszeit (t_{GDB}) zwischen 0 und 1 liegt und für einzelne Produkte (18) empirisch ermittelt und zusammen mit dem Behandlungsprogramm (30) abgespeichert ist.

6. Gargerät nach Anspruch 5, bei dem der Sensor (13) zur Erfassung der Isttemperatur (Tᵢₛₜ) innerhalb des Garraums (14) angeordnet ist.

7. Gargerät nach Anspruch 5 oder 6, bei dem der Anteil (x) im Bereich von 0,3 bis 0,7 liegt und jeweils für ein produktspezifisches Behandlungsprogramm (30) abgespeichert ist.

8. Gargerät nach einem der Ansprüche 5 bis 7, bei dem die aufsummierte Gesamtzeit (tᵢₛₜ), während derer die Solltemperatur (Tₛₒₗₗ) überschritten wird, sowie die Gesamtbehandlungszeit (t_{GDB}) des Behandlungsprogramms (30) ohne etwaige Beschwadungszyklen (20) ermittelt werden.

## Claims

1. A method of controlling a cooking device according to a product-specific treatment program (30) comprising the following steps:
(a) loading a cooking room (14) with products (18) which are supported on at least one product carrier (16);
(b) starting a product-specific treatment program (30) at least with one treatment step (23, 24);
(c) heating the cooking room (14) to a set temperature (Tₛₒₗₗ) according to a time-temperature-specification of the treatment program (30);
(d) monitoring, whether the actual temperature (Tᵢₛₜ) reaches the set temperature (Tₛₒₗₗ) given by the treatment program (30), or exceeds it;
(e) summing up the total treatment time (tᵢₛₜ), within which the set temperature (Tₛₒₗₗ) is exceeded;
(f) in case the inspection according to step (d) is to be answered with "yes", switching off the heater (15);
(g) in case the inspection according to step (d) is to be answered with "no", further examining, whether the total time (tᵢₛₜ) during which the set temperature (Tₛₒₗₗ) is exceeded, is greater than or equal to a product-specific fraction (x) of a pre-set total treatment time (t_{GDB}) of the treatment program (30) (tᵢₛₜ ≥ x ● t_{GDB}), wherein the product-specific fraction (x) of the total treatment time (t_{GDB}) is between 0 and 1, which is empirically determined for individual products (18) and stored together with the treatment program (30);
(h) in case the inspection according to step (g) is to be answered with "no", switching on the heater (15);
(i) in case the inspection according to step (g) is to be answered with "yes", switching off the heater (15);
(j) further inspecting, whether the total treatment time (tₛₒₗₗ) of a treatment step (23, 24) is reached (tₛ ≥ tₛₒₗₗ);
(k) in case the inspection according to step (j) is to be answered with "yes", ending the treatment step (23, 24);
(l) in case the inspection according to step (j) is to be answered with "no", repeating the steps (c) to (k).

2. The method of claim 1, wherein the summed up total time (tᵢₛₜ), during which the set temperature (Tₛₒₗₗ) is exceeded, as well as the total treatment time (t_{GDB}) of the treatment program (30) are determined without any steaming cycles (20).

3. The method of claim 1 or 2, wherein the product-specific fraction (x) of the total treatment time (t_{GDB}) is in the range of 0.3 to 0.7 and is determined for individual products empirically and stored together with the treatment program (30).

4. The method of any of claims 1 to 3, wherein the treatment step (23, 24) is ended, in case the door (17) is opened or a steaming cycle not included within the treatment program (30) is initiated.

5. A cooking device for heat treating of products (18), comprising a cooking room (14) for receiving product carriers (16), further comprising a heater (15) for heating the cooking room (14), a sensor (13) for monitoring the actual temperature (Tᵢₛₜ), an output signal of which is fed to a controller (19) which is configured for automatically controlling a heat treatment process, preferably according to a product-specific treatment program (30) according to any of the preceding claims, wherein the controller (19) is configured to determine the time during which the actual temperature (Tᵢₛₜ) reaches a set temperature (Tₛₒₗₗ) given by the treatment program, or exceeds it, and to sum it up, and in case the summed up time (tᵢₛₜ) during which the said temperature (Tₛₒₗₗ) given by the treatment program is exceeded reaches a specific, product-specific fraction (x) of a pre-set total treatment time (t_{GDB}) of the treatment program (30) (tᵢₛₜ ≥ x ● t_{GDB}) is configured to switch off the heater (15), wherein the product-specific fraction (x) of the total treatment time (t_{GDB}) is between 0 and 1 and is determined for individual products (18) empirically and stored together with the treatment program (30).

6. The cooking device of claim 5, wherein the sensor (13) for monitoring the actual temperature (tᵢₛₜ) is arranged within the cooking room (14).

7. The cooking device of claim 5 or 6, wherein the fraction (x) is in the range of 0.3 to 0.7 and is respectively stored for a product-specific treatment program (30).

8. The cooking device of any of claims 5 to 7, wherein the summed up total time (tᵢₛₜ) during which the set temperature (Tₛₒₗₗ) is exceeded, as well as the total treatment time (t_{GDB}) of the treatment program (30) is determined without any steaming cycles (20).

## Revendications

1. Procédé, destiné à commander un appareil de cuisson selon un programme de traitement (30) spécifique à un produit, comportant les étapes suivantes :
(a) du chargement d'un espace de cuisson (14) avec des produits (18), qui sont reçus sur au moins un support de produits (16) ;
(b) du lancement d'un programme de traitement (30) spécifique au produit, avec au moins une étape de traitement (23, 24) ;
(c) de la mise en température de l'espace de cuisson (14) à une température de consigne (Tₛₒₗₗ) selon une prescription temps/température du programme de traitement (30) ;
(d) de la supervision, si la température réelle (Tᵢₛₜ) atteint ou dépasse la température de consigne (Tₛₒₗₗ) prédéfinie par le programme de traitement (30) ;
(e) de la totalisation du temps total (tᵢₛₜ), pendant lequel la température de consigne (Tₛₒₗₗ) est dépassée ;
(f) dans le cas où la vérification selon l'étape (d) doit recevoir la réponse « oui », de la mise à l'arrêt du chauffage (15) ;
(g) dans le cas où la vérification selon l'étape (d) doit recevoir la réponse « non », de la poursuite de la vérification, si le temps total (tᵢₛₜ) pendant lequel la température de consigne (Tₛₒₗₗ) est dépassée est supérieur ou égal (tᵢₛₜ ≥ x • t_{GDB}) à une partie spécifique au produit (x) d'un temps de traitement total (t_{GDB}) prédéfini du programme de traitement (30), sachant que la partie spécifique au produit (x) du temps de traitement total (t_{GDB}) se situe entre 0 et 1 et pour des produits (18) individuels est déterminée de manière empirique et mémorisée en commun avec le programme de traitement (30) ;
(h) dans le cas où la vérification selon l'étape (g) doit recevoir la réponse « non », de la mise en route du chauffage (15) ;
(i) dans le cas où la vérification selon l'étape (g) doit recevoir la réponse « oui », de la mise à l'arrêt du chauffage (15) ;
(j) de la poursuite de la vérification si la durée totale (tₛₒₗₗ) d'une étape de traitement (23, 24) est atteinte (tₛ ≥ tₛₒₗₗ) ;
(k) dans le cas où la vérification selon l'étape (j) doit recevoir la réponse « oui », de l'arrêt de l'étape de traitement (23, 24) ;
(l) dans le cas où la vérification selon l'étape (j) doit recevoir la réponse « non », de la réitération des étapes(c) à (k).

2. Procédé selon la revendication 1, lors duquel on détermine le temps total (tᵢₛₜ) additionné, pendant lequel la température de consigne (Tₛₒₗₗ) est dépassée, ainsi que le temps de traitement total (t_{GDB}) du programme de traitement (30) sans d'éventuels cycles d'apport de vapeur (20).

3. Procédé selon la revendication 1 ou 2, lors duquel la partie spécifique au produit (x) du temps de traitement total (t_{GDB}) se situe dans l'ordre de 0,3 à 0,7 et est déterminée de manière empirique pour des produits (18) individuels et mémorisée en commun avec le programme de traitement (30).

4. Procédé selon l'une quelconque des revendications 1 à 3, lors duquel l'étape de traitement (23, 24) est arrêtée si on ouvre la porte (17) ou si un cycle d'apport de vapeur est lancé qui n'est pas prévu dans le programme de traitement (30).

5. Appareil de cuisson, destiné au traitement thermique de produits (18), doté d'un espace de cuisson (14) destiné à recevoir des supports de produits (16), doté d'un chauffage (15) destiné à mettre en température l'espace de cuisson (14), doté d'un capteur (13), destiné à superviser la température réelle (Tᵢₛₜ) dont le signal de sortie est amené à un système de commande (19) qui est conçu pour la commande automatique d'un processus de traitement thermique, de préférence selon un programme de traitement (30) spécifique à un produit selon l'une quelconque des revendications précédentes, le système de commande (19) étant conçu pour détecter et pour additionner le temps pendant lequel la température réelle (Tᵢₛₜ) atteint ou dépasse une température de consigne (Tₛₒₗₗ) prédéfinie par le programme de traitement et lorsque le temps additionné (tᵢₛₜ) pendant lequel la température de consigne (Tₛₒₗₗ) prédéfinie par le programme de traitement est dépassée atteint(tᵢₛₜ ≥ x • t_{GDB}) une certaine partie spécifique au produit (x) du temps de traitement total (t_{GDB}) prédéfini du programme de traitement (30), pour mettre à l'arrêt le chauffage (15), sachant que la partie spécifique au produit (x) du temps de traitement total (t_{GDB}) se situe entre 0 et 1 et est déterminée de manière empirique pour des produits (18) individuels et mémorisée en commun avec le programme de traitement (30).

6. Appareil de cuisson selon la revendication 5, sur lequel le capteur (13) destiné à détecter la température réelle (Tᵢₛₜ) est placé à l'intérieur de l'espace de cuisson (14).

7. Appareil de cuisson selon la revendication 5 ou 6, pour lequel la partie (x) se situe dans un ordre de 0,3 à 0,7 et est respectivement mémorisée pour un programme de traitement (30) spécifique à un produit.

8. Appareil de cuisson selon l'une quelconque des revendications 5 à 7, sur lequel le temps total additionné (tᵢₛₜ), pendant lequel la température de consigne (Tₛₒₗₗ) est dépassée, ainsi que le temps de traitement total (t_{GDB}) du programme de traitement (30) sont déterminés sans d'éventuels cycles d'apport de vapeur (20).
